# EUROPÄISCHE PATENTANMELDUNG

(11) **EP 2 682 563 A2**
(43) Veröffentlichungstag der Anmeldung: **08.01.2014**
(21) Anmeldenummer: 13175153.9
(22) Anmeldetag: 04.07.2013
(51) Int. Cl.: E21D 9/00, E21B 17/01, G01B 11/27, G01S 5/16

(54) **Fehlerrobuste Sensorik zum Ermitteln einer räumlichen Beziehung zwischen Anlagenkomponenten unter rauen Bedingungen**

(30) Priorität: 05.07.2012 DE 202012102496 U
(71) Anmelder: Montanuniversität Leoben, 8700 Leoben (AT)
(72) Erfinder: O'Leary, Paul, 8323 St. Marein / Graz (AT); Harker, Matthew, 8700 Loeben (AT); Golser, Johann, 5020 Salzburg (AT)
(74) Vertreter: Dilg, Haeusler, Schindelmann Patentanwaltsgesellschaft mbH

(57) **Zusammenfassung**

Sensoranordnung (106, 108) zum Ermitteln einer räumlichen Beziehung zwischen einer ersten Komponente (102) und einer zweiten Komponente (104) einer Anlage (100), insbesonere einer Tunnelbohrmaschine, wobei die Komponenten (102, 104) relativ zueinander beweglich sind, wobei die Sensoranordnung (106, 108) eine Markereinrichtung (112), die an der ersten Komponente (102) anbringbar ist, eine Strahlungserfasseinrichtung (114) die an der zweiten Komponente (104) anbringbar ist und die eingerichtet ist, von der Markereinrichtung (112) und/oder von deren unmittelbarer Umgebung (110) ausgesandte elektromagnetische Strahlung zu erfassen, und eine Ermittlungseinrichtung (118) aufweist, die zum Ermitteln der räumlichen Beziehung zwischen der ersten Komponente (102) und der zweiten Komponente (104) basierend auf der erfassten elektromagnetischen Strahlung und basierend auf vorbekannten geometrischen Daten betreffend die Markereinrichtung (112) ausgebildet ist.

## Beschreibung

Die Erfindung betrifft eine Sensoranordnung zum Ermitteln einer räumlichen Beziehung zwischen einer ersten Komponente und einer relativ dazu beweglichen zweiten Komponente einer Anlage sowie eine Anlage mit einer solchen Sensoranordnung und ein Verfahren zum Ermitteln einer räumlichen Beziehung zwischen einer ersten Komponente und einer zweiten Komponente einer Anlage.

Eine Tunnelbohrmaschine ist eine Maschine, die zum Bau von Tunneln eingesetzt wird. Bauteile einer Tunnelbohrmaschine sind ein Abbauschild mit Vorschub- und Verspanneinrichtungen, Einrichtungen für den Einbau von Stütz- und Ausbaumaßnahmen, Einrichtungen zum Materialabtransport, eine Versorgungseinheit (Strom, Druckluft, Bewetterung, Wasser), und Transporteinrichtungen für Ausbruchsmaterial, Stützmittel und Ausbaumaterialien.

Bei einer Tunnelbohrmaschine und anderen komplexen Anlagen ist es als Basis für eine präzise Steuerung der Bauteile oder Komponenten wichtig, die räumliche Lage von einzelnen Bauteilen oder Komponenten relativ zueinander bestimmen zu können. Dies ist in vielen Fällen in schmutziger Umgebung, unter dem Einfluss starker mechanischer Belastungen und somit unter rauen Bedingungen erforderlich.

Es ist eine Aufgabe der vorliegenden Erfindung, eine Sensorik zum Ermitteln einer räumlichen Beziehung zwischen Anlagenkomponenten bereitzustellen, die auch unter rauen Bedingungen fehlerrobust einsetzbar ist.

Diese Aufgabe wird durch die Gegenstände mit den Merkmalen gemäß den unabhängigen Ansprüchen gelöst. Weitere Ausführungsbeispiele sind in den abhängigen Ansprüchen gezeigt.

Gemäß einem Ausführungsbeispiel der vorliegenden Erfindung ist eine Sensoranordnung zum Ermitteln einer räumlichen Beziehung (die auch Relativorientierung genannt werden kann, insbesondere eine Relativposition und/oder eine Relativwinkelstellung zwischen den beiden Komponenten) zwischen einer ersten Komponente und einer zweiten Komponente einer Anlage geschaffen, wobei die Komponenten relativ zueinander beweglich sind, wobei die Sensoranordnung eine Markereinrichtung, die an der ersten Komponente anbringbar oder angebracht ist, eine Strahlungserfasseinrichtung, die an der zweiten Komponente anbringbar oder angebracht ist und die eingerichtet ist, von der Markereinrichtung und/oder von deren unmittelbarer Umgebung (d.h. einem direkt an die Markereinrichtung angrenzendem Bereich, der sich hinsichtlich der elektromagnetischen Aussendeeigenschaften von der Markereinrichtung unterscheidet) ausgesandte (d.h. reflektierte oder aktiv emittierte) elektromagnetische Strahlung zu erfassen, und eine Ermittlungseinrichtung aufweist, die zum Ermitteln der räumlichen Beziehung zwischen der ersten Komponente und der zweiten Komponente basierend auf der erfassten elektromagnetischen Strahlung und basierend auf vorbekannten geometrischen Daten betreffend die Markereinrichtung ausgebildet ist.

Gemäß einem weiteren Ausführungsbeispiel der vorliegenden Erfindung ist eine Anlage (insbesondere eine Industrieanlage) geschaffen, die eine erste Komponente und eine zweite Komponente aufweist, wobei die Komponenten relativ zueinander beweglich sind, wobei die Anlage ferner eine Sensoranordnung mit den oben beschriebenen Merkmalen zum Ermitteln einer räumlichen Beziehung zwischen der ersten Komponente und der zweiten Komponente aufweist.

Gemäß noch einem anderen Ausführungsbeispiel der vorliegenden Erfindung ist ein Verfahren zum Ermitteln einer räumlichen Beziehung zwischen einer ersten Komponente und einer zweiten Komponente einer Anlage geschaffen, wobei die Komponenten (insbesondere während des Betriebs der Anlage) relativ zueinander beweglich sind oder bewegt werden, wobei eine Markereinrichtung an der ersten Komponente angebracht ist und eine Strahlungserfasseinrichtung an der zweiten Komponente angebracht ist, wobei bei dem Verfahren mit der Strahlungserfasseinrichtung von der Markereinrichtung und/oder von deren unmittelbarer Umgebung ausgesandte elektromagnetische Strahlung erfasst wird, und die räumliche Beziehung zwischen der ersten Komponente und der zweiten Komponente basierend auf der erfassten elektromagnetischen Strahlung und basierend auf vorbekannten geometrischen Daten betreffend die Markereinrichtung ermittelt wird.

Im Rahmen dieser Anmeldung wird unter dem Begriff "Komponente" eine Baugruppe einer Anlage verstanden, die ganz oder teilweise relativ zu einer anderen Komponente beweglich ist. Für viele technische Anwendungen ist es erforderlich, Relativorientierungen zwischen unterschiedlichen Komponenten einer eine gemeinsame Funktion erfüllenden Anlage zu kennen, um Steueraufgaben zuverlässig durchführen zu können.

Unter dem Begriff "Anlage" wird im Rahmen dieser Anmeldung insbesondere eine komplexe technische Anordnung aus mehreren funktionell zusammenwirkenden Komponenten verstanden, die gemeinsam eine technische Gesamtaufgabe erfüllen.

Unter dem Begriff "räumliche Beziehung" wird im Rahmen dieser Anmeldung insbesondere eine Information verstanden, die indikativ dafür ist, welcher Abstand zwischen unterschiedlichen Komponenten besteht, ob und welche translatorischen Verschiebungen zwischen unterschiedlichen Komponenten vorliegen und/oder ob es eine Rotation (zum Beispiel einen Winkelversatz) zwischen den Komponenten gibt. Gemäß einem exemplarischen Ausführungsbeispiel kann die Ermittlungseinrichtung somit eingerichtet sein, als Relativorientierung einen Abstand zwischen der ersten Komponente und der zweiten Komponente und/oder eine translatorische Verschiebung zwischen der ersten Komponente und der zweiten Komponente entlang einer oder zweier Achsen senkrecht zu einem Abstandsvektor zwischen der ersten Komponente und der zweiten Komponente und/oder einen Verdrehwinkel zwischen der ersten Komponente und der zweiten Komponente zu bestimmen.

Unter dem Begriff "Markereinrichtung" wird im Rahmen dieser Anmeldung jede körperliche Struktur verstanden, deren strukturelle Eigenschaften der Ermittlungseinrichtung bekannt sind, so dass es ein Vergleich dieser tatsächlichen Eigenschaften der Markereinrichtung mit Eigenschaften der Markereinrichtung auf einem Abbild gestattet, Positions- und/oder Rotationsinformationen abzuleiten. Die Markereinrichtung kann jede Einrichtung sein, die elektromagnetische Strahlung anders absenden kann als ihre unmittelbare Umgebung, was die Strahlungserfasseinrichtung dann detektieren kann. Die Markereinrichtung kann eine passive, elektromagnetische Strahlung reflektierende Struktur oder eine aktive Lichtquelle sein, wobei selbst Helligkeitsunterschiede zwischen der Markereinrichtung und der Umgebung bereits die Eigenschaft einer Markereinrichtung begründen können.

Unter dem Begriff "elektromagnetische Strahlung" werden elektromagnetische Wellen einer geeigneten Wellenlänge verstanden, für welche die Strahlungserfasseinrichtung sensitiv ist. Vorzugsweise operieren sowohl die Strahlungserfassungseinrichtung als auch die Markereinrichtung im sichtbaren Bereich, d.h. im Bereich von Wellenlängen zwischen 400 nm und 800 nm. Gemäß anderen Ausführungsbeispielen kann allerdings auch im Infrarotbereich, im Ultraviolettbereich oder in anderen Frequenzbereichen gearbeitet werden.

Unter dem Begriff "vorbekannte geometrische Daten" wird eine oder werden mehrere Informationen geometrischer Natur betreffend die Markereinrichtung verstanden. Dies können die Form eines äußeren Umrisses der Markereinrichtung, deren Fläche, Koordinaten einer Position der Markereinrichtung, Abstände zwischen unterschiedlichen Markern der Markereinrichtung, etc. sein. Diese geometrischen Daten enthalten Informationen, die so beschaffen sind, dass auf deren Basis die Ermittlungseinrichtung aus dem von der Strahlungserfasseinrichtung erfasstem Bild der Markereinrichtung auf die räumliche Relativlage zwischen den Komponenten schließen kann.

Gemäß einem exemplarischen Ausführungsbeispiel der Erfindung wird eine räumliche Beziehung zwischen zwei Komponenten einer Anlage, zum Beispiel zwischen einem Bohrkopf und einem Gripper-Schild einer Tunnelbohrmaschine, dadurch erfasst, dass berührungslos elektromagnetische Strahlung von Markern (und/oder der direkten Markerumgebung) an der ersten Komponente durch eine Strahlungserfasseinrichtung an der zweiten Komponente erfasst wird. Sind die geometrischen Eigenschaften der Markereinrichtung bekannt, dann kann die Ermittlungseinrichtung auf deren Basis und unter Verwendung des von der Strahlungserfasseinrichtung erfassten Abbildes der Markereinrichtung zuverlässig ermitteln, wie die beiden Komponenten gegenwärtig zueinander orientiert, d.h. gedreht und/oder beabstandet sind. Diese Information kann als Steuerinformation für die Anlage verwendet werden, so dass ein fehlerrobuster Betrieb hergestellt werden kann. Indem die räumliche Beziehung rein optisch erfasst werden kann, sind Kabelverbindungen zwischen den Komponenten genauso entbehrlich wie eine zusätzliche Energieversorgung für die Komponente, an der die Markereinrichtung angebracht oder ausgebildet ist.

Im Weiteren werden zusätzliche exemplarische Ausführungsbeispiele der Sensoranordnung, der Anlage und des Verfahrens beschrieben.

Gemäß einem exemplarischen Ausführungsbeispiel kann die Markereinrichtung eine Mehrzahl von Markerstrukturen enthalten, die an der ersten Komponente angebracht und im dreidimensionalen Raum, insbesondere nichtplanar, angeordnet sind. Die komplette relative Pose der Komponenten zueinander kann anhand irgendeines Satzes von zum Beispiel retroreflektierenden Markerstrukturen ermittelt werden, die im dreidimensionalen Raum angeordnet sind (und kein degeneriertes Muster bilden). Es ist ausreichend, die Konstellation der Markerstrukturen oder Targets zu kennen, so dass die notwendigen Parameter der Strahlungserfasseinrichtung (zum Beispiel einer Kamera) ermittelt werden können. Die Anordnung der Markerstrukturen auf zwei Ebenen (zum Beispiel auf zwei Platten) ist ein Beispiel für eine solche nichtplanare Anordnung, welche obige Anforderungen erfüllt.

Gemäß einem exemplarischen Ausführungsbeispiel kann die Sensoranordnung eine elektromagnetische Strahlung nichtreflektierende (zum Beispiel eine dunkle, insbesondere schwarze) Trägerstruktur (beispielsweise eine Trägerplatte) aufweisen, an der die Markereinrichtung aus elektromagnetische Strahlung reflektierendem Material (zum Beispiel weiß oder retroreflektierend) angeordnet ist, und die an der ersten Komponente anbringbar ist. Gemäß einem alternativen Ausführungsbeispiel kann die Sensoranordnung eine elektromagnetische Strahlung reflektierende (zum Beispiel eine weiße oder retroreflektierende) Trägerstruktur (beispielsweise eine Trägerplatte) aufweisen, an der die Markereinrichtung aus elektromagnetische Strahlung nicht reflektierendem Material (zum Beispiel dunkel, insbesondere schwarz) angeordnet ist, und die an der ersten Komponente anbringbar ist.

Gemäß dem zuvor beschriebenen exemplarischen Ausführungsbeispiel kann die Trägerstruktur als genau eine Trägerplatte ausgebildet sein. Dies führt zu einer kompakten Anordnung.

Alternativ kann die Trägerstruktur als mehrere miteinander verbundene und voneinander in Abstandsrichtung zwischen den Komponenten räumlich beabstandete separate Trägerplatten ausgebildet sein. Zum Beispiel können zwei (oder mehr) Trägerplatten, an denen jeweils Marker bzw. Markerstrukturen der Markereinrichtungen angebracht bzw. vorgesehen sein können, mittels Verbindungsstangen oder anderen Verbindungsmitteln voneinander in definierter Weise räumlich beanstandet sein. Somit kann die Trägerstruktur aus retroreflektierenden Markerstrukturen gebildet sein, die in zwei oder mehr unterschiedlichen Ebenen montiert sind und somit im dreidimensionalen Raum positioniert sind. Die Verwendung von mindestens zwei Markerebenen erlaubt die Bestimmung von allen sechs Freiheitsgraden, die mit einer relativen Pose assoziiert sind. Anders ausgedrückt kann durch das Beabstanden mehrerer (planarer oder gekrümmter) Trägerplatten zumindest auch in der Abstandsrichtung zwischen den beiden zueinander räumlich beweglichen Komponenten ein erfasstes Größenverhältnis zwischen den einzelnen Markerstrukturen an den unterschiedlichen Trägerplatten zum Ableiten sterischer bzw. räumlicher Zusatzinformation verwendet werden.

Gemäß einem exemplarischen Ausführungsbeispiel kann die Ermittlungseinrichtung zum Ermitteln der räumlichen Beziehung unter Verwendung der erfassten elektromagnetischen Strahlung von nur einer Teilmenge von Markerstrukturen der Markereinrichtung und basierend auf vorbekannten geometrischen Daten betreffend nur die Teilmenge der Markerstrukturen der Markereinrichtung ausgebildet sein. Anschaulich wird bei dem beschriebenen Ausführungsbeispiel nur ein Teil der zur Verfügung stehenden Markerstrukturen zum Ermitteln der räumlichen Beziehung zwischen den beiden Komponenten herangezogen, wohingegen ein anderer Teil der Markerstrukturen hierfür in einem Betriebszustand unberücksichtigt bleiben kann. Dadurch kann einerseits der Rechenaufwand zum Bestimmen der räumlichen Beziehung zwischen den beiden Komponenten gering gehalten werden, andererseits können bei Ausfall einzelner Markerstrukturen (zum Beispiel bei teilweiser oder vollständiger Verdeckung durch Schmutz) redundant vorgesehene andere Markerstrukturen ergänzend oder alternativ verwendet werden, um dennoch die Ermittlung der räumlichen Beziehung zwischen den Komponenten durchführen zu können. Somit kann ein redundantes Vorsehen eines Satzes von retroreflektierenden Markerstrukturen sicherstellen, dass eine vollständige Messung auch im Falle einer Verdeckung oder Verschmutzung einzelner Markerstrukturen möglich ist. Dadurch kann die erfindungsgemäße Sensoranordnung auch unter rauen Bedingungen, zum Beispiel bei Tunnelbohrmaschinen, fehlerrobust eingesetzt werden.

Die Trägerstruktur kann eine Platte sein, welche sich hinsichtlich der Reflexions- und/oder Absorptionseigenschaften bezüglich elektromagnetischer Strahlung von der Markereinrichtung unterscheidet. Wichtig ist nur, dass zwischen der Markereinrichtung und der Trägerstruktur ein messtechnisch erfassbarer Kontrast (hinsichtlich der Wechselwirkung mit elektromagnetischer Strahlung) besteht.

Gemäß einem exemplarischen Ausführungsbeispiel kann die Markereinrichtung retroreflektierend ausgebildet sein. Eine retroreflektierende Markereinrichtung ist **dadurch gekennzeichnet, dass** sie einfallende elektromagnetische Strahlung bevorzugt oder sogar vollständig entlang der Einfallsrichtung zurückreflektiert. Dies erhöht die Genauigkeit der Markerdetektion, insbesondere in der Gegenwart von Staub und Schmutz. Neben planoptischen Winkelreflektoren (Tripelspiegeln und Tripelprismen) und Rückstrahlern gibt es rotationssymmetrische Linsenreflektoren (Katzenaugen, Lüneburg-Linsen) als retroreflektierende Körper.

Gemäß einem exemplarischen Ausführungsbeispiel kann die Markereinrichtung vollständig passiv ausgebildet sein. Unter einer vollständig passiven Markereinrichtung kann ein solche verstanden werden, die selbst keinerlei aktive Bauteile aufweisen muss oder zum Betrieb mit zum Beispiel elektrischen Signalen angesteuert oder mit elektrischer Energie versorgt werden muss. So reicht es vollkommen aus, dass die Markereinrichtung eine Struktur aus retroreflektiven Materialstücken ist, die auf einem hinsichtlich optischer Eigenschaften unterschiedlichen Untergrund aufgebracht sind. Jedoch sind keinerlei aktive Lichtquellen, Stromversorgungseinheiten, Prozessoren oder dergleichen an der Markereinrichtung erforderlich. Dies ist besonders vorteilhaft für den Einsatz der erfindungsgemäßen Sensoranordnung unter harschen Bedingungen, wie zum Beispiel in einer Tunnelbohrmaschine oder an einer Ölplattform, wo solche Komponenten einer starken mechanischen Beanspruchung und Verschmutzung ausgesetzt sein können. Durch die passive Ausgestaltung der Markereinrichtung ist diese, häufig an schwierig zugänglicher Stelle angeordnet, wartungsarm oder sogar annähernd wartungsfrei. Erfindungsgemäß reicht es vollkommen aus, dass eine rein passive Struktur an der ersten Komponente angebracht ist, die dann berührungslos von der Erfasseinrichtung an der zweiten Komponente ausgelesen werden kann. Dies ist auch aus folgendem Grunde vorteilhaft: Wenn die beiden Komponenten unter harschen Bedingungen, wie einer starken Verschmutzung oder starker mechanischer Beanspruchung, betrieben werden, so ist auch jegliche Kabelverbindung zwischen den beiden Komponenten problematisch und fehleranfällig. Die erfindungsgemäße Sensoranordnung funktioniert vollkommen berührungslos, so dass der gesamte Raum zwischen den beiden Komponenten von irgendwelchen Verbindungsmitteln oder Kommunikationseinrichtungen frei bleiben kann. Insbesondere ist es auch möglich, dass die Markereinrichtung unabhängig von jeglicher Stromversorgung betrieben wird.

Gemäß einem exemplarischen Ausführungsbeispiel kann die Markereinrichtung eine Mehrzahl von separaten Markern oder Markerstrukturen aufweisen, deren jeweilige Form, deren jeweilige Größe und deren Relativposition zueinander die vorbekannten geometrischen Daten bilden. Ist eine Mehrzahl von Markern vorgesehen, zum Beispiel mehrere voneinander beabstandet angebrachte kreisförmige Marker, so kann nicht nur die Form und Größe eines einzelnen Markers, sondern zusätzlich auch die Relativposition zwischen unterschiedlichen Markern, insbesondere ein Abstand, verwendet werden, um die räumliche Stellung zwischen den beiden Komponenten zu bestimmen. Dies erhöht die Genauigkeit der Erfassung.

Gemäß einem exemplarischen Ausführungsbeispiel kann die Markereinrichtung vier vorzugsweise kreisförmige Marker bzw. Markerstrukturen aufweisen, vorzugsweise an Ecken eines gedachten Rechtecks, weiter vorzugsweise an Ecken eines gedachten Quadrats, angeordnet. Durch das Vorsehen von vier Markern, die in einem vorgegebenen geometrischen Verhältnis zueinander stehen, ist es mathematisch möglich, sechs Freiheitsgrade an Relativorientierungen zu bestimmen. Dies sind zwei Freiheitsgrade betreffend Relativverschiebungen, ein Freiheitsgrad betreffend einen Abstand sowie drei Rotationsfreiheitsgrade. Somit kann die vollständige Relativorientierung zwischen den Komponenten mit vier Markern ermöglicht werden. Es ist jedoch zu betonen, dass auch eine andere Anzahl von Markern unter den Umfang der Erfindung fällt, insbesondere ein, zwei, drei, fünf, sechs, sieben oder acht Marker.

Gemäß einem anderen exemplarischen Ausführungsbeispiel kann die Markereinrichtung sieben vorzugsweise kreisförmige Marker bzw. Markerstrukturen aufweisen. Drei dieser sieben Marker können an einer ersten Trägerplatte angeordnet sein, und die restlichen vier Marker können an einer zweiten Trägerplatte angeordnet sein, die an der ersten Trägerplatte befestigt sein kann und gegenüber der ersten Trägerplatte in Richtung der zweiten Komponente hervorstehen kann. Die Marker der ersten Trägerplatte können an Ecken eines gedachten Dreiecks angeordnet sein. Drei Marker der zweiten Trägerplatte können an Ecken eines gedachten Dreiecks angeordnet sein, und der vierte Marker kann im Inneren (zum Beispiel im Schwerpunkt) des Dreiecks angeordnet sein.

Gemäß einem exemplarischen Ausführungsbeispiel kann die Strahlungserfasseinrichtung eine Kamera aufweisen, die zum Erfassen eines die Markereinrichtung enthaltenden Bildes eingerichtet ist. Eine solche Kamera kann zum Beispiel eine CCD-Kamera oder eine CMOS-Kamera sein. Ein Empfindlichkeitsbereich der Kamera kann auf die Wellenlänge der elektronischen Strahlung abgestimmt sein, die von der Markereinrichtung und/oder deren unmittelbarer Umgebung ausgesendet oder reflektiert wird. Um Hintergrundstrahlung zu unterdrücken, kann auch ein wellenlängenselektives (zum Beispiel nur für optisches Licht durchlässiges) Filter vor der der Kamera angeordnet werden.

Gemäß einem exemplarischen Ausführungsbeispiel kann die Sensoranordnung eine elektromagnetische Strahlungsquelle (insbesondere eine Lichtquelle) aufweisen, die zum Erzeugen von elektromagnetischer Strahlung (insbesondere von sichtbarem Licht) zum Beleuchten der Markereinrichtung und/oder von dessen unmittelbarer Umgebung ausgebildet und angeordnet ist. Die elektromagnetische Strahlungsquelle kann elektromagnetische Strahlungen in einem Wellenlängenbereich aussenden, für den die Strahlungserfasseinrichtung empfindlich ist.

Gemäß einem exemplarischen Ausführungsbeispiel kann die elektromagnetische Strahlungsquelle angrenzend an die Strahlungserfasseinrichtung an der zweiten Komponente anbringbar sein. Durch diese Geometrie kann sichergestellt werden, dass das von der Strahlungsquelle emittierte, von der Markereinrichtung und/oder deren Umgebung reflektierte und von der Strahlungserfasseinrichtung detektierte Licht zumindest überwiegend dasselbe ist. Auf diese Weise kann Rauschen unterdrückt werden.

Gemäß einem exemplarischen Ausführungsbeispiel kann die elektromagnetische Strahlungsquelle mehrere, insbesondere sechs, separate elektromagnetische Strahler, insbesondere Leuchtdioden oder Leuchtdiodenarrays, aufweisen, die auf die Markereinrichtung und/oder auf deren unmittelbare Umgebung richtbar oder gerichtet sind. Somit kann eine Emissionsrichtung der Primärstrahlung der Strahler so eingestellt sein, dass die Primärstrahlung auf die Markereinrichtung gerichtet wird. Aufgrund des Vorsehens mehrerer Strahler kann Primärstrahlung die Markereinrichtung selbst dann erreichen, wenn in dem Strahlungsweg zwischen einem individuellen Strahler und der Markereinrichtung ein Hindernis auftreten sollte, da die anderen Strahler hinsichtlich ihres Strahlungswegs hin zur Markereinrichtung immer noch frei sein können.

Gemäß einem exemplarischen Ausführungsbeispiel können die elektromagnetischen Strahler die Strahlungserfasseinrichtung ringförmig umgeben, insbesondere konzentrisch um die Strahlungserfasseinrichtung herum angeordnet sein. Bei einer zentral angeordneten Kamera und darum herum angeordneten Leuchtdioden kann ein besonders gutes Signal-RauschVerhältnis erreicht werden.

Gemäß einem exemplarischen Ausführungsbeispiel können die elektromagnetischen Strahler in einer planen Ebene angeordnet sein, die senkrecht zu einer Strahlungserfassrichtung der Strahlungserfasseinrichtung ist. Somit können Strahlungserfasseinrichtung und die einzelnen Strahler alle nah beinander angeordnet sein, so dass die Propagationsrichtung der elektromagnetischen Primärstrahlung von den Strahlern zur Markereinrichtung sowie der elektromagnetischen Sekundärstrahlung von der Markereinrichtung zu der Strahlungserfasseinrichtung im Wesentlichen dieselbe sein kann.

Gemäß einem exemplarischen Ausführungsbeispiel können die elektromagnetische Strahlungsquelle und die Strahlungserfasseinrichtung derart angeordnet bzw. ausgerichtet sein, dass eine Abstrahlrichtung von der elektromagnetischen Strahlungsquelle und eine Erfassrichtung der Strahlungserfasseinrichtung zueinander antiparallel sind. Auf diese Weise kann der Raumbereich, der für das Propagieren von elektromagnetischer Strahlung zum Bestimmen der Relativorientierung zwischen den beiden Komponenten benötigt wird, sehr klein gehalten werden, was zu einer sehr kompakten Anordnung führt.

Gemäß einem exemplarischen Ausführungsbeispiel kann die Ermittlungseinrichtung eingerichtet sein, mittels Bildverarbeitung von Erfassdaten der Strahlungserfasseinrichtung und basierend auf den vorbekannten geometrischen Daten ein Abbild der Markereinrichtung auf den Erfassdaten zu erkennen und basierend darauf für die Relativorientierung zwischen den beiden Komponenten indikative Informationen zu ermitteln. Aufgrund des Kontrasts zwischen der Markereinrichtung und deren direkter Umgebung kann unter Einsatz von Bildverarbeitungsalgorithmen, zum Beispiel durch Mustererkennung oder Ähnlichem, ein Abbild der Markereinrichtung auf dem von der Strahlungserfasseinrichtung detektierten Bild bestimmt werden. Kriterien für die Bestimmung der Position und Orientierung des Abbilds sind die vorbekannten geometrischen Daten, mit denen eine ausreichend gute oder sogar optimierte Übereinstimmung ermöglicht ist. Ist zum Beispiel vorbekannt, dass die Markereinrichtung ein kreisförmiges Gebilde ist, so kann dies bei der Bildverarbeitung der Erfassdaten als zu erfüllende Rahmenbedingung eingehen.

Zum Beispiel können zur Bildverarbeitung Methoden eingesetzt werden, die in Matthew Harker, Paul O'Leary, "Direct Estimation of Homogeneous Vectors: An Ill-Solved Problem in Computer Vision", In: P. Kalra und S. Peleg (Herausgeber): ICVGIP 2006, LNCS 4338, Seiten 919 bis 930, 2006 offenbart sind.

Gemäß einem exemplarischen Ausführungsbeispiel kann die Ermittlungseinrichtung eingerichtet sein, die Bildverarbeitung basierend auf einer Parameteranpassung (d.h. einem Fit), insbesondere einer Parameteranpassung zur Minimierung der Summe der kleinsten quadratischen Abstände, zwischen den Erfassdaten und den parametrisierten vorbekannten geometrischen Daten durchzuführen. Ist eine Markerstruktur zum Beispiel eine Kreisfläche, so sind die Parameter zum Anpassung der Erfassdaten zum Beispiel der Kreisradius und die Koordinaten des Kreismittelpunkts. Ein solcher Least-Squares Fit ist numerisch einfach und erlaubt eine fehlerrobuste Bestimmung des Abbilds der Markereinrichtung aus den Erfassdaten der Strahlungserfasseinrichtung.

Gemäß einem exemplarischen Ausführungsbeispiel kann die Ermittlungseinrichtung eingerichtet sein, bei teilweiser Verdeckung der Markereinrichtung mittels Bildverarbeitung von Erfassdaten der Strahlungserfasseinrichtung basierend auf den vorbekannten geometrischen Daten und unter Modellierung einer teilweisen Verdeckung ein Abbild eines unverdeckten Teils der Markereinrichtung auf den Erfassdaten zu erkennen. Durch Schmutz auf der Markereinrichtung oder ein Objekt zwischen Erfasseinrichtung und Markereinrichtung kann es vorkommen, dass permanent oder vorübergehend ein Bereich der Markereinrichtung nicht erkannt wird. Für die Geometrie typischer Verdeckungsszenarien charakteristische Daten können zum Beispiel in einer Datenbank gespeichert sein. Für einen kreisförmigen Marker etwa kann die Verdeckung eines Segments, das einen Teil des Umfangs des Kreises enthält, typisch sein. Eine Auswertesoftware der Ermittlungseinrichtung kann dann aus einem Restkreissegment die wahrscheinlichste Position bzw. Orientierung des kreisförmigen Markers ermitteln und dabei berücksichtigen, dass ein als verdeckt identifizierter Teil des Markers bei der Anpassung bzw. dem Fit unberücksichtigt bleibt.

Gemäß einem exemplarischen Ausführungsbeispiel kann die Modellierung einer teilweisen Verdeckung durch Anpassung der Erfassdaten auf der Basis von Kurventeilsegmenten einer vorbekannten geometrischen Form der Markereinrichtung erfolgen. Ist also zum Beispiel eine kreisscheibenförmige Markerstruktur entlang eines Teils des Umfangs von Schmutz oder dergleichen verdeckt, so kann der Umfang des unverdeckten Rests durch ein oder mehrere (zum Beispiel aneinander anzustückende) Kreis- oder Bogensegmente angepasst werden. Dann kann die Markerform im verdeckten Bereich unter Verwendung der vorbekannten Information der Umfangsgestalt (zum Beispiel "kreisförmig") extrapoliert werden, um die für den unverdeckten Bereich ermittelten Bogensegmente zum Vervollständigen der erwarteten Umfangsgestalt zu schließen.

Gemäß einem exemplarischen Ausführungsbeispiel kann die Sensoranordnung ein elektronisches Filter aufweisen, insbesondere ein Tiefpassfilter oder ein Bandpassfilter, das zwischen der Strahlungserfasseinrichtung und der Ermittlungseinrichtung zwischengeschaltet ist und eingerichtet ist, ein von der Strahlungserfasseinrichtung bereitgestelltes elektrisches Signal vor Weiterleitung an die Ermittlungseinrichtung zu filtern, um Einflüsse von hochfrequenten Vibrationen der ersten Komponente auf das auszuwertende Messsignal zu unterdrücken. Gemäß diesem bevorzugten Ausführungsbeispiel der Erfindung können Signalkomponenten unterdrückt oder eliminiert werden, die eine hochpräzise Auswertung stören. Insbesondere unter harschen Bedingungen, wie bei einer Tunnelbohrmaschine oder einer Ölplattform, können hochfrequente Zitterbewegungen die Erfassung eines Markers auf dem Abbild erschweren. Durch die elektrische Unterdrückung solcher hochfrequenten Beiträge kann die Auswertegenauigkeit signifikant verbessert werden.

Gemäß einem exemplarischen Ausführungsbeispiel kann die Sensoranordnung ferner zum Ermitteln einer Relativorientierung zwischen der ersten Komponente und einer dritten Komponente der Anlage eingerichtet sein. Hierfür kann die Sensoranordnung eine weitere Messeinrichtung aufweisen (zum Beispiel einen Theodoliten), die zum Ermitteln einer Relativorientierung zwischen der zweiten Komponente und der dritten Komponente eingerichtet ist. Die Ermittlungseinrichtung kann ferner eingerichtet sein, die Relativorientierung zwischen der ersten Komponente und der dritten Komponente basierend auf der ermittelten Relativorientierung zwischen der ersten Komponente und der zweiten Komponente und basierend auf der ermittelten Relativorientierung zwischen der zweiten Komponente und der dritten Komponente zu ermitteln. Zum Beispiel kann das direkte Ermitteln einer Position zwischen der ersten Komponente (insbesondere ein Bohrkopf bzw. ein Frontschild einer Tunnelbohrmaschine) und der dritten Komponente (insbesondere der Theodoliten einer Tunnelbohrmaschine selbst oder eine Komponente, an welcher der Theodolit angeordnet ist) schwierig oder unmöglich sein, zum Beispiel wenn ein direkter Blick zwischen diesen Komponenten (zum Beispiel durch die zweite Komponente, insbesondere ein Gripper-Schild einer Tunnelbohrmaschine) versperrt ist. Dann kann erfindungsgemäß die Messeinrichtung die Orientierung zwischen der zweiten und der dritten Komponente und die Erfasseinrichtung die Orientierung zwischen der ersten und der zweiten Komponente erfassen. Aus diesen beiden Teilinformationen kann dann die Orientierung der ersten Komponente bezüglich der dritten Komponente ermittelt werden. Ist zum Beispiel die Absolutposition der dritten Komponente bekannt, so kann in einem weiteren Auswerteschritt auch die Absolutposition der ersten Komponente bestimmt werden.

Ein einsetzbarer Theodolith kann ein Zielfernrohr, einen Vertikal- und einen Horizontal-Teilkreis und mehrere Libellen aufweisen. Letztere dienen zur lotrechten Ausrichtung des Gerätes (Horizontierung). In das Zielfernrohr kann ein Strichkreuz integriert sein, mit dem das Ziel anvisiert wird.

Gemäß einem exemplarischen Ausführungsbeispiel kann die Anlage als Tunnelbohrmaschine ausgebildet sein. Gerade bei einer Tunnelbohrmaschine sind aufgrund des technischen Umfelds die Bedingungen zum Implementieren einer Sensoranordnung zum Bestimmen einer Relativposition zwischen mehreren zueinander relativ beweglichen Komponenten der Tunnelbohrmaschine schwierig. Beim Betrieb einer Tunnelbohrmaschine ist diese nicht nur starken Vibrationen und sonstigen mechanischen Lasten, sondern auch einer Verschmutzung durch Staub, Geröll, Flüssigkeiten, etc. ausgesetzt. Daher ist in diesem Umfeld die erfindungsgemäße Lösung, die vollkommen berührungslos funktioniert und ohne Kabel zwischen den beiden Komponenten auskommt, besonders vorteilhaft.

Gemäß einem exemplarischen Ausführungsbeispiel kann die erste Komponente ein Bohrkopf oder ein Frontschild (die aneinander fixiert sein können) und die zweite Komponente ein Schild, insbesondere ein Gripper-Schild, für eine Tunnelbohrmaschine sein. Der Bohrkopf enthält die eigentlichen Schneidelemente zum Abtragen von Erde oder Gestein. Das Frontschild ist gemeinsam mit dem Bohrkopf translatorisch beweglich und mit diesem gekoppelt. Zwar kann der Bohrkopf zum Abtragen von Material gedreht werden, wohingegen das Frontschild drehfrei gelagert sein kann, jedoch führen Bohrkopf und Frontschild eine translatorische Bewegung gemeinsam durch. Das Gripper-Schild ist gegenüber der Bohrkopf/Frontschild-Anordnung in Vortriebsrichtung rückversetzt und gegenüber der Bohrkopf/Frontschild-Anordnung translatorisch bewegbar. Bohrkopf/Frontschild und Gripper-Schild sind zwei Komponenten einer Tunnelbohrmaschine, die beim Betrieb der Tunnelbohrmaschine zeitlich veränderten Relativorientierungen ausgesetzt sind. Allerdings ist die Kenntnis der Relativorientierung zwischen Bohrkopf/Frontschild und Gripper-Schild bzw. sogar die Kenntnis der Absolutorientierung von Bohrkopf/Frontschild vorteilhaft für einen hochpräzisen und fehlerrobusten Betrieb der gesamten Tunnelbohrmaschine. Die beschriebene Sensoranordnung ist vollkommen berührungslos ausbildbar und arbeitet auch unter starken Verschmutzungsbedingungen fehlerrobust, selbst wenn einzelne Bereiche der Markereinrichtung durch Verschmutzung nicht mehr auf dem Abbild sichtbar sein sollten.

Gemäß einem anderen exemplarischen Ausführungsbeispiel kann die Anlage als Fossilbrennstoffförderanlage, insbesondere als Erdgasförderanlage oder als Erdölförderanlage, ausgebildet sein. Auch bei Fossilbrennstoffförderanlagen ist die Relativanordnung zwischen unterschiedlichen Komponenten eine wichtige Informationsquelle, um die Betriebssicherheit zu erhöhen und/oder um Steueraufgaben zu erfüllen. Zum Beispiel sollte die Orientierung zwischen einem sogenannten Christmas Tree einer Steigleitung und einer schwimmenden oder auf festem Untergrund angeordneten Plattform mit hoher Genauigkeit bekannt sein, um etwaige mechanische Fehlorientierungen oder Verschiebungen zwischen diesen Komponenten auszuschließen. Auch unter den auf einer Fossilbrennstoffförderanlage herrschenden mechanisch belastenden und schmutzigen Bedingungen ist die numerisch einfache und daher schnelle bzw. im Wesentlichen in Echtzeit mögliche Bestimmung der Relativposition zwischen einzelnen Komponenten vorteilhaft.

Gemäß einem exemplarischen Ausführungsbeispiel kann die erste Komponente eine (insbesondere schwimmfähige) Plattform und die zweite Komponente ein Steigrohr oder ein Eruptionskreuz für eine (zum Beispiel Offshore-betriebene) Fossilbrennstoffförderanlage sein. Unter einem Steigrohr wird eine Rohrleitung verstanden, die von einer Erdöl- oder Erdgasquelle aus bis zu einer Förderplattform geführt ist, um das Erdöl oder Erdgas zu fördern. Ein Eruptionskreuz (englisch Christmas Tree) dient als Bohrlochabschluss einer Bohrung nach Erdöl oder Erdgas und weist zum Beispiel eine geflanschte Rohrleitung, Formstücke, Manometer und/oder Armaturen auf, die fest mit der Verrohrung des Bohrloches verbunden sind. Mit Hilfe eines solchen Eruptionskreuzes ist es möglich, das anstehende Erdöl und Erdgas dem Bohrloch kontrolliert zu entnehmen und zum Beispiel in eine Pipeline einzuspeisen.

Allerdings ist auch zwischen anderen Komponenten der Fossilbrennstoffförderanlage die Bestimmung einer Relativposition erfindungsgemäß ermöglicht.

Gemäß einem exemplarischen Ausführungsbeispiel können die erste Komponente und die zweite Komponente kontaktfrei und verbindungsmittelfrei sein und zum Ermitteln der räumlichen Beziehung mittels der elektromagnetischen Strahlung kommunizierfähig gekoppelt sein. Die kommunizierfähige Kopplung erfolgt durch die elektromagnetische Strahlung, die frei zwischen den beiden Komponenten propagiert und dadurch Informationen hinsichtlich der Relativorientierung transportiert.

Gemäß einem exemplarischen Ausführungsbeispiel können die erste Komponente und die zweite Komponente relativ zueinander translatorisch verschiebbar und/oder rotatorisch bewegbar gelagert sein.

Gemäß einem exemplarischen Ausführungsbeispiel kann die Anlage eine Steuereinheit (zum Beispiel einen Prozessor) aufweisen, die eingerichtet ist, die erste Komponente und/oder die zweite Komponente basierend auf der ermittelten Relativorientierung zu steuern.

Im Folgenden werden exemplarische Ausführungsbeispiele der vorliegenden Erfindung mit Verweis auf die folgenden Figuren detailliert beschrieben.
Fig. 1 zeigt eine Sensoranordnung zum Ermitteln einer räumlichen Relativstellung zwischen Anlagenkomponenten gemäß einem exemplarischen Ausführungsbeispiel der Erfindung.
Fig. 2 zeigt eine Kameraaufnahme von vier kreisförmigen Markern, die zum Simulieren einer Verschmutzungssituation teilweise verdeckt sind.
Fig. 3 bis Fig. 6 zeigen einen Ausschnitt einer Kameraaufnahme und Darstellungen im Rahmen einer zugehörigen Bildverarbeitung zum Ermitteln einer Position eines Markers, der auf der Kameraaufnahme nur teilweise abgebildet ist.
Fig. 7 bis Fig. 10 zeigen einen Ausschnitt einer Kameraaufnahme und Darstellungen im Rahmen einer zugehörigen Bildverarbeitung zum Ermitteln einer Position eines Markers, der auf der Kameraaufnahme teilweise verdeckt ist.
Fig. 11 bis Fig. 14 zeigen einen Ausschnitt einer Kameraaufnahme und Darstellungen im Rahmen einer zugehörigen Bildverarbeitung zum Ermitteln einer Position eines Markers, der auf der Kameraaufnahme teilweise verdeckt ist.
Fig. 15 bis Fig. 18 zeigen einen Ausschnitt einer Kameraaufnahme und Darstellungen im Rahmen einer zugehörigen Bildverarbeitung zum Ermitteln einer Position eines Markers, der auf der Kameraaufnahme teilweise verdeckt ist.
Fig. 19 bis Fig. 21 zeigen eine Tunnelbohrmaschine mit einem Bohrkopf an einem Frontschild und mit einem Gripper-Schild, bei der die räumliche Beziehung zwischen Bohrkopf/Frontschild und dem Gripper-Schild mittels einer Sensoranordnung gemäß einem exemplarischen Ausführungsbeispiel der Erfindung bestimmt wird.
Fig. 22 zeigt eine Offshore-Gasförderanlage, bei der die räumliche Beziehung zwischen unterschiedlichen Komponenten mittels einer Sensoranordnung gemäß einem exemplarischen Ausführungsbeispiel der Erfindung erfasst wird.
Fig. 23 zeigt eine räumliche Ansicht eines Teils einer Sensoranordnung gemäß einem exemplarischen Ausführungsbeispiel, bei der zwei in unterschiedlichen Ebenen und in definiertem Abstand voneinander angebrachte Trägerplatten mit Markerstrukturen eingesetzt werden.
Fig. 24 zeigt eine Draufsicht des Teils der Sensoranordnung gemäß Fig. 23.

Gleiche oder ähnliche Komponenten in unterschiedlichen Figuren sind mit gleichen Bezugsziffern versehen.

Zunächst werden einige Vorüberlegungen zur vorliegenden Erfindung beschrieben, basierend auf denen exemplarische Ausführungsbeispiele der Erfindung aufgefunden wurden. Beschrieben wird im Weiteren eine Sensoranordnung zum Messen einer X-Translation und einer Y-Translation sowie einer axialen Rotation zweier Komponenten, zum Beispiel eines Bohrkopfs gegenüber einem Gripper-Schild einer Tunnelbohrmaschine. Ferner kann bei einer solchen Sensoranordnung ein Skalierungsfaktor der Messdaten einer Zieltafel verwendet werden, um einen Abstand Z des Bohrkopfs gegenüber dem Gripper-Schild zu bestimmen. X, Y und Z sind aufeinander senkrecht stehende Raumachsen. Mit vier gegebenen Punkten in einer Ebene und vier Messdaten in einer zweiten Ebene, zum Beispiel mit einer Kamera aufgenommen, ist es möglich, die vollständigen Beziehungen, d.h. alle sechs Freiheitsgrade (der Rotation und der Translation) zwischen den beiden zueinander beweglichen Komponenten zu identifizieren. Die Anzahl der Freiheitsgrade einer Messung beeinflusst auch die Fehlerfortpflanzung und die Unsicherheit der gemessenen Positionen. Daher werden nur die notwendigen Freiheitsgrade mit der Messung ermittelt.

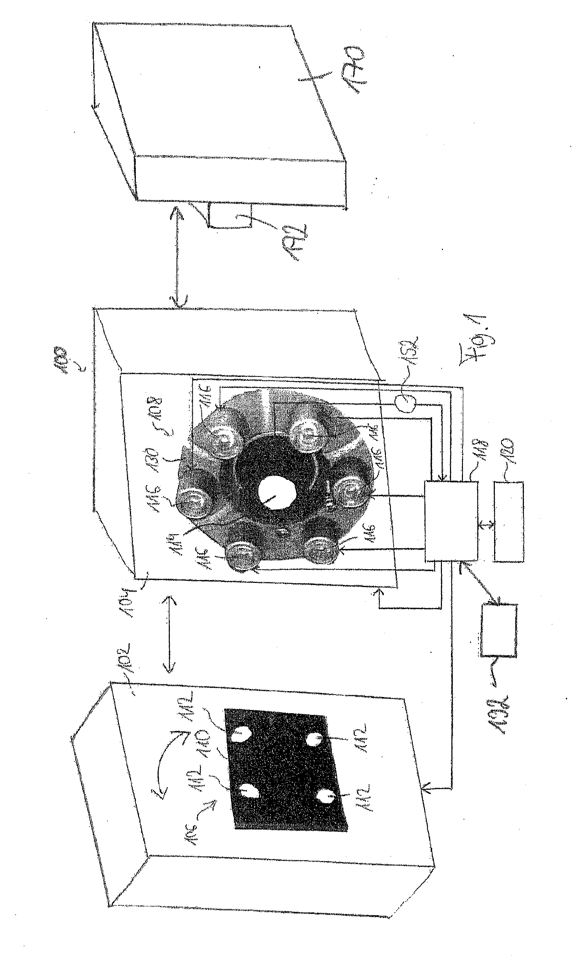

Im Weiteren wird bezugnehmend auf **Fig. 1** eine Sensoranordnung gemäß einem exemplarischen Ausführungsbeispiel der Erfindung beschrieben.

Die Sensoranordnung gemäß Fig. 1 dient der Ermittlung einer Relativorientierung bzw. einer räumlichen Beziehung zwischen einer ersten Komponente 102 einer Anlage 100 und einer dazu relativ beweglichen zweiten Komponente 104 der Anlage 100. Fig. 1 zeigt ferner eine dritte Komponente 170 der Anlage 100. Die zweite Komponente 104 ist dabei so positioniert, dass sie den freien Blick der dritten Komponente 170 auf die erste Komponente 102 verdeckt.

Die Anlage 100 kann zum Beispiel eine Tunnelbohrmaschine sein, bei der die mehreren Komponenten 102, 104, 170 miteinander wirkgekoppelt sind. Dann kann zum Beispiel die erste Komponente 102 ein Bohrkopf bzw. ein mit dem Bohrkopf starr gekoppeltes Frontschild sein, die zweite Komponente 104 kann ein Gripper-Schild sein und die dritte Komponente 170 kann zum Beispiel eine Haltevorrichtung für einen Theodolithen 172 sein.

An der ersten Komponente 102 ist eine schwarze und daher nichtreflektierende Trägerplatte 110 angebracht. An der Trägerplatte 110 sind vier aus einem retroreflektiven Material bestehende kreisförmige Marker 112 angeordnet. Die Marker 112 sind an vier Ecken eines gedachten Quadrats angebracht und haben in diesem Ausführungsbeispiel dieselbe Fläche. Gemeinsam bilden die Komponenten 110, 112 eine Zieltafel 106, die an der ersten Komponente 102 fest montiert ist oder aber einstückig mit der ersten Komponente 102 ausgebildet ist.

An der zweiten Komponente 104 fest montiert ist ein ringförmiger Träger 130, der in seinem Zentrum eine Kamera 114 als Strahlungserfasseinrichtung aufweist. Rings um die Kamera 114 herum in äquidistanter ringförmiger Anordnung platziert sind sechs LED-Lichtquellen 116, welche optisches Licht emittieren können. Gemeinsam bilden die Komponenten 114, 116, 130 eine Detektoranordnung 108. Im Betrieb strahlen die LED-Lichtquellen 116 sichtbares Licht in Richtung der Marker 112 ab. Da diese aus einem retroreflektiven Material hergestellt sind, wird das emittierte Licht entlang der Einfallsrichtung zurückgeworfen und trifft auf die optische Kamera 114, so dass an dieser ein Abbild der Zieltafel 106 aufgenommen werden kann.

Die aufgenommenen elektronischen Kameradaten werden zunächst durch ein elektronisches Tiefpassfilter 152 geführt, an dem hochfrequente Komponenten aus dem Signal herausgefiltert werden. Diese stammen von möglichen Zitterbewegungen, die bei Betrieb der Anlage 100 (zum Beispiel eine Tunnelbohrmaschine) auftreten können. Die hochfrequenten Zitterbewegungen würden die Auswertung des Bildes stören, so dass das Zwischenschalten des Tiefpassfilters 152 die Auswertequalität signifikant verbessert.

Die tiefpassgefilterten Rohdaten der Kamera 114 werden dann an einen Prozessor 118 weitergeleitet. Der Prozessor 118 kann zum Beispiel eine Central Processing Unit (CPU) oder ein Mikroprozessor sein. Der Prozessor 118 dient als Ermittlungseinrichtung, die aus dem Abbild der Zieltafel 106 die Positionen, die Form und die Größe der vier kreisförmigen Marker 112 bestimmt. Hierfür werden Methoden der Bildverarbeitung eingesetzt. Dabei kann der Prozessor 118 auf Daten einer Datenbank zurückgreifen, die in einem Speicher 192 gespeichert sein können. Die Datenbank enthält Informationen über Form, Größe und Position der Marker 112 sowie ggf. über Abstände zwischen den Markern 112. Basierend auf diesen vorbekannten geometrischen Daten betreffend die Marker 112 ermittelt der Prozessor 118 die Position der Marker 112 und die Abstände der Marker 112 voneinander und kann daraus für die räumliche Beziehung zwischen der Komponente 102 und der Komponente 104 indikative Informationen ermitteln.

Fig. 1 zeigt außerdem eine Benutzerschnittstelle oder Eingabe/AusgabeEinrichtung 120, über die ein Benutzer mit dem Prozessor 118 kommunizieren kann. Über die Eingabe/Ausgabe-Einrichtung 120 kann ein Benutzer Steuereingaben in das System eingeben. Die Eingabe/Ausgabe-Einrichtung 120 kann einem Benutzer ferner Ausgabedaten von dem Prozessor 118 bereitstellen.

Da die Anordnung aus Markern 112 lediglich eine Anordnung von retroreflektierenden Körpern auf der schwarzen Trägerplatte 110 ist, ist sie vollständig passiv und benötigt weder eine Energieversorgung noch eine andere Form der Kabelzuführung. Auch sind keine Kommunikationsleitungen zwischen der Zieltafel 106 und dem Prozessor 118 bzw. der Detektoranordnung 108 nötig. Daher ist die Sensoranordnung gemäß Fig. 1 auch in einer schmutzigen Umgebung, in einem mechanisch belastenden Umfeld und unter auch in sonstiger Weise harschen Bedingungen möglich, ohne dass die Zuverlässigkeit der Detektion darunter leiden würde.

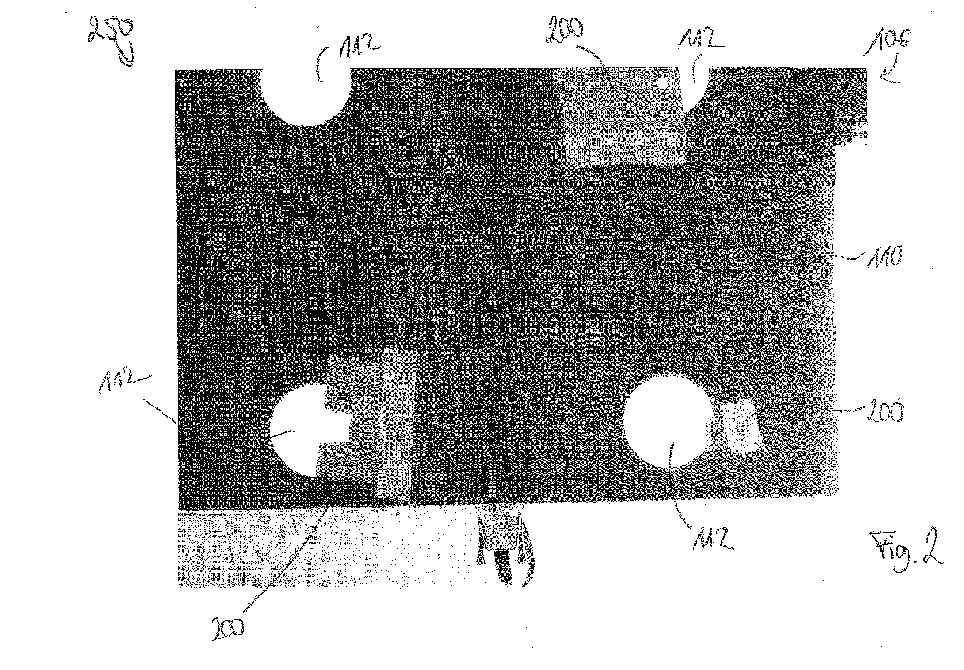

Wie unten bezugnehmend auf Fig. 2 bis Fig. 18 beschrieben werden wird, kann der Prozessor 118 auch bei teilweiser Verdeckung der Marker 112 einen unverdeckten Teil der Marker 112 auf deren Abbild erkennen, um den vollständigen Marker 112 zu rekonstruieren und dessen Position zu bestimmen. Selbst wenn nur ein Teil eines Kreisrings erkennbar ist, ist immer noch eine zuverlässige Detektion möglich, selbst wenn einzelne Marker 112 zum Beispiel durch Staub verschmutzt sind.

Die Messanordnung gemäß Fig. 1 enthält somit die Kamera 114 und die Lichtquellen 116, die nahe der Achse der Linse der Kamera 114 montiert sind. Die Lichtquellen 116 sind konzentrisch um die optische Achse der Kamera 114 angeordnet und belichten die Marker 112 entlang derselben Propagationsrichtung, entlang der auch die Kamera 114 detektiert. Die Kamera 114 und die Lichtquellen 116 sind an der zweiten Komponente 104 montiert, welche stationär an ihrer Position verbleibt. Die Zieltafel 106 ist dagegen an der zu vermessenden beweglichen Komponente 102 angeordnet und besteht in dem beschriebenen Ausführungsbeispiel aus den vier retroreflektierenden Markern 112. Es ist alternativ auch möglich, dass nur ein Marker 112 oder eine beliebige andere Anzahl von Markern 112 vorgesehen ist. Die retroreflektierenden Marker 112 sind vollständig passiv und unempfindlich gegenüber Vibrationen. Die Anzahl der retroreflektiven Marker 112 bestimmt die Anzahl der Freiheitsgrade, die vermessen werden können. Mit vier oder mehr Markern 112 können alle Bewegungsfreiheitsgrade bestimmt werden.

Von einem praktischen Gesichtspunkt aus ist es vorteilhaft, dass eine zuverlässige Bestimmung der Position der Zieltafel 106 ermöglicht ist. Dies ist durch das gezeigte Design der retroreflektierenden Marker 112 und der Bildverarbeitung von deren Abbild auf der Kamera 114 ermöglicht. Die retroreflektierenden Marker 112 sind als Kreisscheiben ausgestaltet, die auf einem nichtreflektierenden Trägermaterial der Trägerplatte 110 angeordnet sind. Auf diese Weise bildet die äußere Kontur der Marker 112 immer eine Jordan-Kurve. Die Kontur besteht aus einem geordneten Satz von Punkten. Der Satz von Punkten, der eine Kontur zusammensetzt, wird in eine Anzahl von n Bögen aufgeteilt, von denen jeder einen Winkel α bezogen auf ein erstes Moment der Kontur schneidet. Die Teilabschnitte überlappen nicht notwendigerweise, tun dies aber in einem vorteilhaften Ausführungsbeispiel.

Jeder insbesondere kreisförmige Bogen wird bezogen auf den Teilabschnitt einer Anpassung (einem Fit) unterzogen, wobei ein die Varianz oder Standardabweichung minimierender Algorithmus verwendet wird (siehe Matthew Harker, Paul O'Leary, "Direct Estimation of Homogeneous Vectors: An Ill-Solved Problem in Computer Vision", In: P. Kalra und S. Peleg (Herausgeber): ICVGIP 2006, LNCS 4338, Seiten 919 bis 930, 2006). Dies ermöglicht das Anpassen eines Bogens, der gegenüber der Varianz nicht beeinflusst ist. Nur diejenigen Teilabschnitte werden ausgewählt, die ein oder mehrere vorbestimmte Kriterien erfüllen, zum Beispiel Toleranzradius ("tolerance of radius"), mittlere Restgröße ("mean residual"), maximale Restgröße ("maximum residual"), etc.

Der einzige Satz von Punkten, der zu den ausgewählten Teilabschnitten gehört, wird ausgewählt, und der Kreis wird dann an diesem Satz von Punkten angepasst. Dies ermöglicht die korrekte Bestimmung des Mittelpunktes der Retroreflektoren, sogar im Falle von signifikanter Verdeckung. Solch eine Verdeckung oder Okklusion kann bei dieser Art von Anwendung aufgrund von Staub, Schmutz, Matsch oder dergleichen auf der Zieltafel 106 auftreten.

Die starken Vibrationen des Bohrkopfes können zu einer großen momentanen Verschiebung relativ zu dem Gripper-Schild führen. Folglich wird das Tiefpassfilter 152 eingesetzt, um aus den Messresultaten den Anteil zu extrahieren, der gegen Vibrationen unempfindlich ist.

Im Falle der Messung der Position eines Eruptionskreuzes oder Christmas Tree in einer Gasproduktionsumgebung ist die vertikale Verschiebung (zum Beispiel ungefähr 500 mm in Z-Richtung) um eine Größenordnung größer als die seitlichen Verschiebungen (zum Beispiel ungefähr ±50 mm in X- und Y-Richtung). Folglich wird in solchen Anwendungen mehr Aufwand in das Bestimmen der Skalierung der Zieltafel 106 gesteckt. Dies wird durch die Tatsache vereinfacht, dass die Bewegungsursache in X- bzw. Y-Richtung durch den Raum begrenzt wird, der durch die Mittelpunkte der Retroreflektoren bestimmt wird.

**Fig. 2** zeigt ein Kamerabild 250 eines Teils der in Fig. 1 gezeigten Zieltafel 106. In dem Kamerabild 250 sind die vier kreisförmigen Marker 112 jeweils teilweise zu erkennen, da diese für das Experiment gemäß Fig. 2 mit Verdeckungsobjekten 200 teilweise verdeckt worden sind. Der gemäß Fig. 2 obere linke kreisförmige Marker 112 ist nur teilweise auf dem Kamerabild 250 zu erkennen.

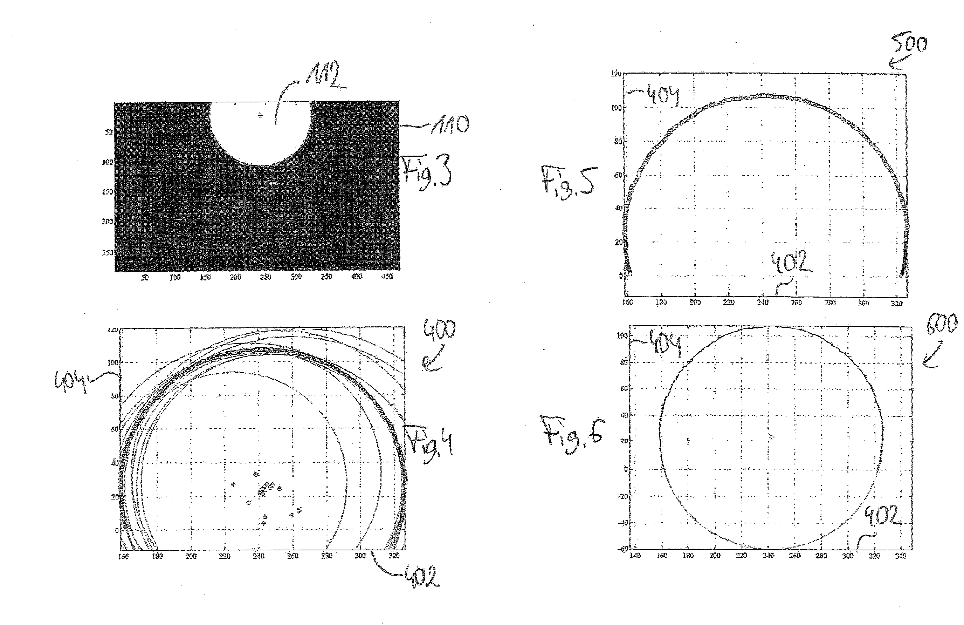

Fig. 3 bis Fig. 6 zeigen Anpassungen des gemäß Fig. 2 oben links angeordneten kreisförmigen Markers 112, der sich teilweise bis aus dem Kamerabild 250 heraus erstreckt (siehe Detail in **Fig. 3**). In Diagramm 400 in **Fig. 4** ist entlang einer Abszisse 402 eine Horizontalkoordinate, entlang einer Ordinate 404 eine Vertikalkoordinate gemäß Fig. 2 aufgetragen. Fig. 4 zeigt, dass aus den vorhandenen Messpunkten des nur teilweise zu erkennenden kreisförmigen Markers 112 dessen Position und Umfang zuverlässig identifiziert wurden. **Fig. 5** zeigt ein Diagramm 500 mit dem Ergebnis der Anpassung, und **Fig. 6** zeigt ein Diagramm 600, in welchem der verdeckte Teilbereich des gemäß Fig. 2 linken oberen kreisförmigen Markers 112 rechnerisch ergänzt wurde.

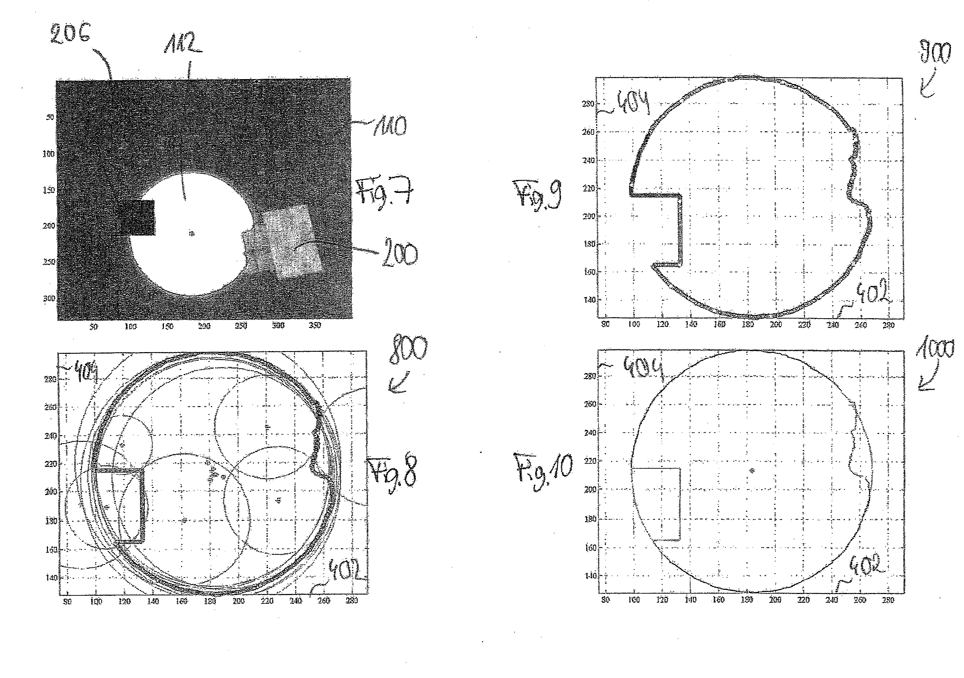

Das Detail des Kamerabilds 250 gemäß **Fig. 7** sowie Diagramme 800 in **Fig. 8****,** 900 in **Fig. 9** und 1000 in **Fig. 10** entsprechen dem Detail des Kamerabilds 250 gemäß Fig. 3 bzw. den Diagrammen 400, 500 bzw. 600 in Fig. 4 bis Fig. 6, beziehen sich aber auf einen anderen, mittels Verdeckungsstrukturen 200, 206 teilweise abgedeckten kreisförmigen Marker 112. Auch hier ist eine zuverlässige Konstruktion des Markers 112 möglich gewesen.

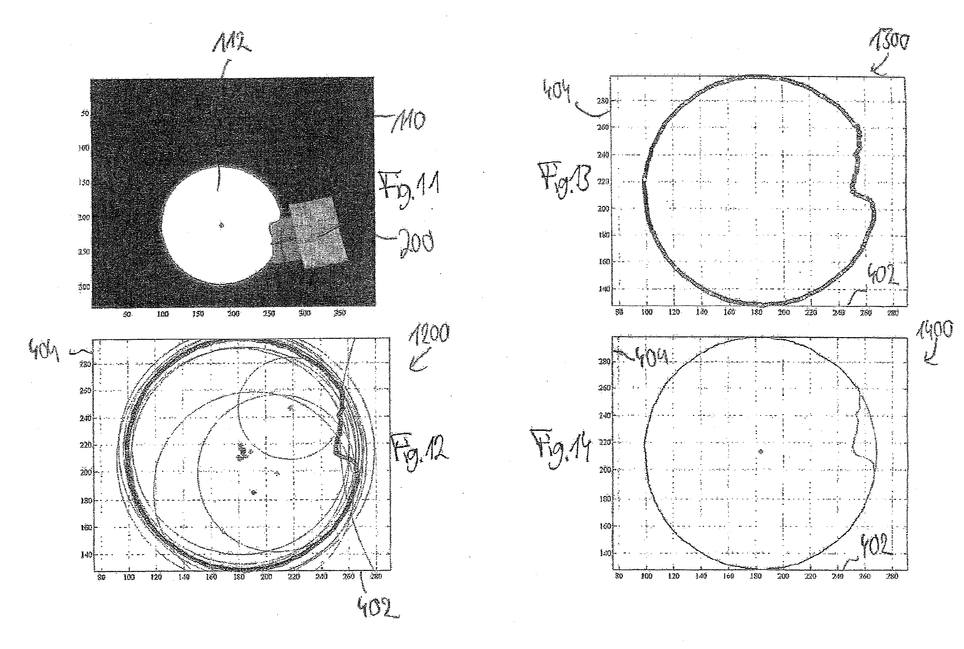

Das Detail des Kamerabilds 250 gemäß **Fig. 11** sowie Diagramme 1200 in **Fig. 12**, 1300 in **Fig. 13** und 1400 in **Fig. 14** entsprechen dem Detail des Kamerabilds 250 gemäß Fig. 3 bzw. den Diagrammen 400, 500 bzw. 600 in Fig. 4 bis Fig. 6, beziehen sich aber auf den gemäß Fig. 2 unten rechts gezeigten und mittels einer Verdeckungsstruktur 200 teilweise abgedeckten kreisförmigen Marker 112. Auch hier ist eine zuverlässige Konstruktion des Markers 112 möglich gewesen.

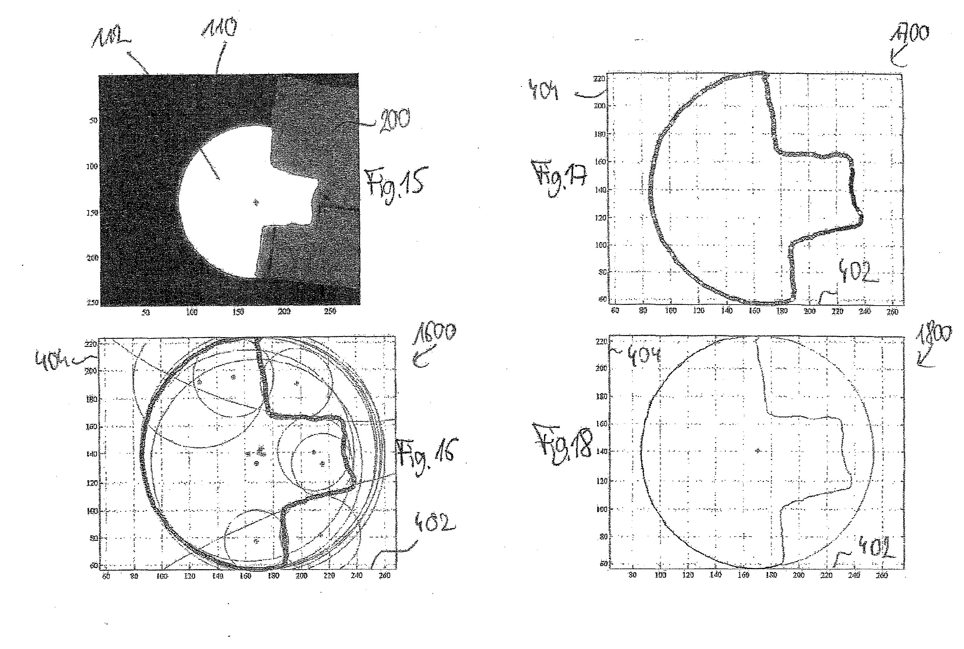

Das Detail des Kamerabilds 250 gemäß **Fig. 15** sowie Diagramme 1600 in **Fig. 16**, 1700 in **Fig. 17** und 1800 in **Fig. 18** entsprechen dem Detail des Kamerabilds 250 gemäß Fig. 3 bzw. den Diagrammen 400, 500 bzw. 600 in Fig. 4 bis Fig. 6, beziehen sich aber auf den gemäß Fig. 2 unten links gezeigten und mittels einer Verdeckungsstruktur 200 teilweise abgedeckten kreisförmigen Marker 112. Auch hier ist eine zuverlässige Konstruktion des Markers 112 möglich gewesen.

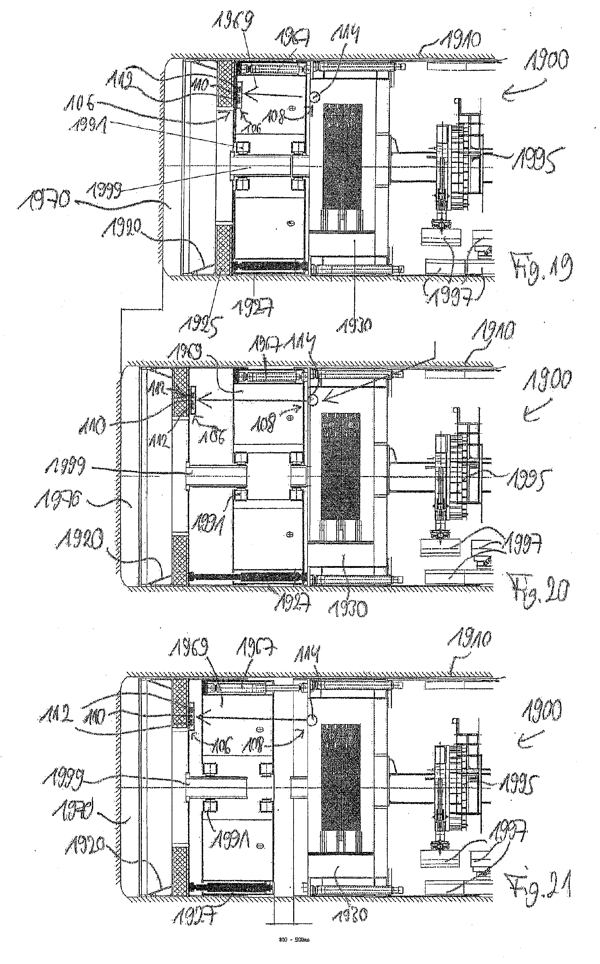

**Fig. 19** zeigt eine Doppelschild-Tunnelbohrmaschine (TBM) 1900 als Beispiel für eine Anlage, in der eine erfindungsgemäße Sensoranordnung implementiert werden kann. Die Tunnelbohrmaschine 1900 befindet sich gemäß Fig. 19 bis Fig. 21 im Inneren eines in einem Gebirge 1910 bereits teilgebohrten Tunnels 1970.

Die Tunnelbohrmaschine 1900 enthält insbesondere einen vorderseitig angeordneten rotierenden Bohrkopf 1920, an dem die eigentlichen Schneidelemente zum Schneiden bzw. Abtragen von Material des Gebirges 1910 befindlich sind. Der Bohrkopf 1920 ist fest und starr an der Vorderseite eines Frontschilds 1925 angebracht. Während das Frontschild 1925 selbst nicht rotiert, rotiert der Bohrkopf 1920 während des Vorschubs und Bohrens der Tunnelbohrmaschine 1900. Allerdings sind bei einer translatorischen Verschiebung der Komponenten 1920, 1925 diese starr gekoppelt, so dass eine solche Bewegung nur gemeinsam durchgeführt wird. Wie in Fig. 19 gezeigt ist, ist die Zieltafel 106 an einer Rückseite des Frontschilds 1925 angebracht.

Fig. 19 zeigt die Tunnelbohrmaschine 1900 in einer Ausgangsposition eines Bohrzyklus.

Ferner ist in Fig. 19 gezeigt, dass ein Gripper-Schild 1930 gegenüber dem Frontschild 1925 rückwärtig angebracht ist. Das Frontschild 1925 ist gegenüber dem Gripper-Schild 1930 in Vortriebsrichtung translatorisch verschiebbar. Diese Relativverschiebung kann durch Teleskopzylinder 1927 generiert werden, die zum Vorschieben bzw. zum Vortrieb des Frontschilds 1925 in eine in **Fig. 20** gezeigte ausgelenkte Stellung gebracht werden können. Dadurch bewegt sich die Tunnelbohrmaschine 1900 anschaulich ähnlich wie ein Regenwurm entlang des Bohrlochs 1970. Somit verändert sich während des Betriebs laufend die Relativposition zwischen Frontschild 1925 und Gripper-Schild 1930, siehe auch Fig. 20.

**Fig. 21** zeigt den Vorschub vom Artikulationsschild 1969 ("ariculation shield", Gelenk Schild) nach Ende eines Hubs, um Zugang zum Gebirge 1910 zu erhalten.

Fig. 20 zeigt die Tunnelbohrmaschine 1900 in einer Position, in der die Teleskopzylinder 1927 ausgefahren sind, was einen Vortrieb des Frontschilds 1925 zur Folge hat. Das Artikulationsschild 1969 mit Artikulationszylindern 1967 wird bei der Vorwärtsbewegung des Frontschilds 1925 nicht mitgezogen. Das Gripper-Schild 1930 hat Zylinder, die sich gegen den Berg verspreizen. Das drehende Schneidrad des Bohrkopfs 1920 dreht sich gegenüber dem Frontschild 1925, wobei der Bohrkopf 1920 aber fest an dem Frontschild 1925 montiert ist. Das vorderseitige Schneidschild der Tunnelbohrmaschine 1900 wird dadurch gegen den Berg gedrückt und trägt diesen ab. Dabei verändert sich der Relativabstand zwischen Frontschild 1925 und Gripper-Schild 1930, wobei deren Relativposition zueinander jeweils mittels der Sensoranordnung bestimmt wird.

Um diese Positionsverschiebung zu ermitteln, ist die Kamera 114 fest an dem Gripper-Schild 1930 montiert, wohingegen die Zieltafel 106 fest an der Rückseite des Frontschilds 1925 angeordnet ist, das wiederum nur gemeinsam mit dem Bohrkopf 1920 bewegt werden kann. Die Detektoranordnung 108 ist an einer Vorderseite des Gripper-Schilds 1930 angebracht.

Fig. 19 bis Fig. 21 zeigen ferner einen Erektor 1995, der dazu dient, Tübbinge genannte Betonsteine 1997 aufzunehmen und an der gebohrten Bohrlochwand 1970 nach und nach anzubringen, um diese auszukleiden und somit zu stabilisieren.

Eine Welle 1999 dient der Übertragung von Rotationsenergie auf den Bohrkopf 1920. Drehmomentreaktionszylinder 1991 dienen ebenfalls zur Übertragung des Drehmoments.

Mittels eines in Fig. 19 und Fig. 20 nicht gezeigten Theodolithen kann eine Position des Gripper-Schilds 1930 georeferenziert eingemessen werden. Ein solcher Theodolith kann einen Laser aufweisen, der sich abwechselnd nach hinten blickend oder nach vorne blickend drehen kann und mittels eines Laserstrahls und der Detektion von Markierungen an der Tunnelbohrmaschine 1900 die Absolutposition des Gripper-Schilds 1930 bestimmt. Dagegen kann mit einem solchen Theodolithen nicht einfach die Position des Frontschilds 1925 bzw. des damit gekoppelten Bohrkopfs 1920 ermittelt werden, da beide keinen rückseitig zugänglichen durchgehenden Blick ermöglichen. Wenn also mittels der erfindungsgemäßen Sensoranordnung 106, 108 die Relativposition zwischen Frontschild 1925 und Gripper-Schild 1930 ermittelt wird, so kann unter Verwendung der mit dem Theodolithen ausgemessenen Absolutposition des Gripper-Schilds 1930 auch die Absolutposition des Gripper-Schilds 1925 ermittelt werden. Solche Absolutpositionen können insbesondere auf eine Tunnelachse bezogen werden.

Die Steuerung der Tunnelbohrmaschine 1900 erfolgt auf Basis der ermittelten Position des Frontschilds 1925 bzw. des damit gekoppelten Bohrkopfs 1920

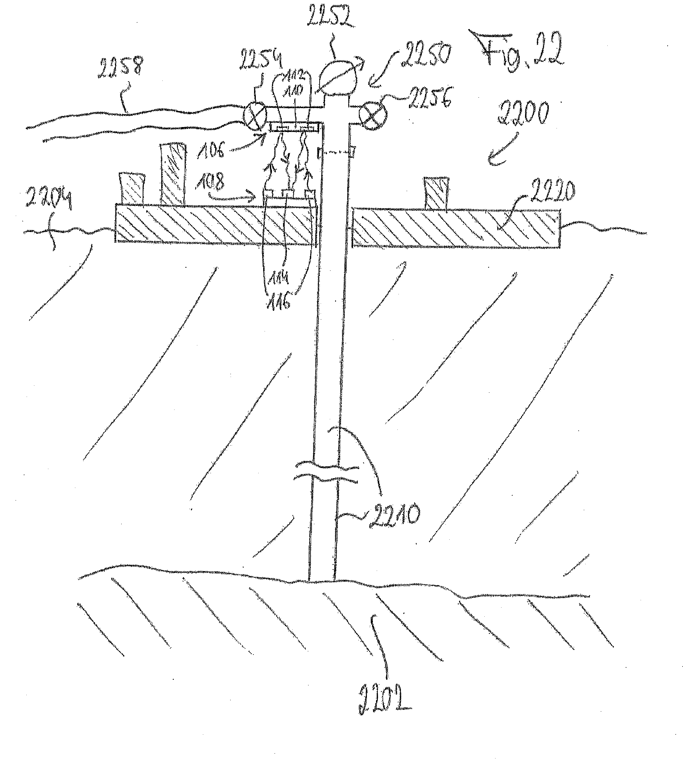

**Fig. 22** zeigt eine Gasförderplattform 2200.

Erdgas aus dem Meeresgrund 2202 wird durch eine Steigleitung 2210 zu der Ölplattform 2220 hin gefördert. Ein Eruptionskreuz 2250 (auch Christmas Tree genannt) am Ende der Steigleitung 2210 bewegt sich beim Fördern in Bezug auf die Ölplattform 2220 leicht. Das Eruptionskreuz 2250 enthält ein Manometer 2252 sowie Flansche 2254, 2256. An Flansch 2254 ist hier eine Pipeline 2258 angeflanscht. Durch das Operieren einer erfindungsgemäßen Sensoranordnung zwischen dem Ende der Steigleitung 2210 einerseits und der Bohrplattform 2220 andererseits kann somit eine räumliche Beziehung zwischen der Steigleitung 2210 bzw. dem Eruptionskreuz 2250 einerseits und der Bohrplattform 2220 der im Ozean 2204 installierten Gasförderanlage 2200 andererseits bestimmt werden.

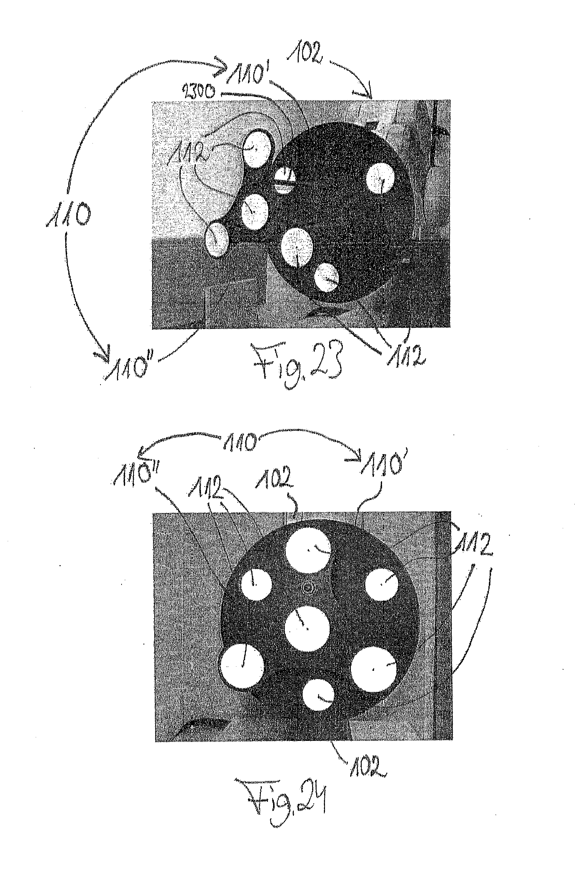

**Fig. 23** zeigt eine räumliche Ansicht eines Teils einer Sensoranordnung gemäß einem exemplarischen Ausführungsbeispiel, bei der zwei in unterschiedlichen Ebenen und in definiertem Abstand voneinander angebrachte Trägerplatten 110', 110" mit Markerstrukturen 112 eingesetzt werden. **Fig. 24** zeigt eine Draufsicht des Teils der Sensoranordnung gemäß Fig. 23.

Die elektromagnetische Strahlung nichtreflektierende Trägerstruktur 110 ist gemäß Fig. 23 durch die zwei miteinander mittels Verbindungsstangen 2300 verbundenen und dadurch voneinander in Abstandsrichtung zwischen den Komponenten (von denen in Fig. 23 nur Komponente 102 gezeigt ist) räumlich beabstandeten Trägerplatten 110', 110" gebildet. An der Trägerplatte 110' sind drei Markerkreise an Ecken eines gedachten gleichseitigen Dreiecks gebildet. An der Trägerplatte 110" sind drei Markerkreise an Ecken eines gedachten gleichseitigen Dreiecks gebildet und ist zusätzlich ein weiterer Markerkreis im Mittelpunkt des Dreiecks gebildet. Die Trägerplatte 110' ist direkt an der ersten Komponente 102 und die Trägerplatte 110" ist mittels der Verbindungsstangen 2300 indirekt an der ersten Komponente 102 angebracht.

Abhängig vom aktuellen Abstand zwischen den beiden Komponenten 102, 104 wird eine an der in Fig. 23 nicht gezeigten zweiten Komponente 104 angebrachte elektromagnetische Strahlungserfasseinrichtung ein variierendes relatives Größenverhältnis der Markerkreise an der Trägerplatte 110' und an der Trägerplatte 110"detektieren. Ist einer Ermittlungseinheit die tatsächliche physische Größe der Markerkreise an den Trägerplatten 110, 110" bekannt, so kann aus dieser Information auch sterische Information abgeleitet werden. Die Verwendung von mehreren Trägerplatten 110', 110" ermöglicht allgemein die Ermittlung von sechs translatorischen bzw. rotatorischen Freiheitsgraden, die mit einer relativen Stellung zwischen den beiden Komponenten 102, 104 und somit auch zwischen den Trägerplatten 110', 110" und der zweiten Komponente 104 einhergehen.

Optional kann eine in Fig. 23 und Fig. 24 nicht gezeigte Ermittlungseinrichtung 118 das Ermitteln der räumlichen Beziehung zwischen den Komponenten 102, 104 unter Verwendung der erfassten elektromagnetischen Strahlung von nur einer Teilmenge von Markerstrukturen der Markereinrichtung 112 (zum Beispiel nur unter Verwendung der Markerkreise an der Trägerplatte 110") und basierend auf vorbekannten geometrischen Daten betreffend nur diese Teilmenge der Markerstrukturen der Markereinrichtung 112 vornehmen. Sollte einer oder mehrere der Markerkreise der Trägerplatte 110" durch Verschmutzung, Abdeckung oder Verdunkelung für den elektromagnetischen Strahlungsdetektor vorübergehend oder dauerhaft unsichtbar sein, kann die Ermittlungseinrichtung 118 für eine vollständige Auswertung erforderliche Zusatzinformation den zum Beispiel redundant vorgesehenen Markerkreisen der Trägerplatte 110' entnehmen.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Sensoranordnung (106, 108) zum Ermitteln einer räumlichen Beziehung zwischen einer ersten Komponente (102) und einer zweiten Komponente (104) einer Anlage (100), wobei die Komponenten (102, 104) relativ zueinander beweglich sind, wobei die Sensoranordnung (106, 108) aufweist:
eine Markereinrichtung (112), die an der ersten Komponente (102) anbringbar ist;
eine Strahlungserfasseinrichtung (114) die an der zweiten Komponente (104) anbringbar ist und die eingerichtet ist, von der Markereinrichtung (112) und/oder von deren unmittelbarer Umgebung (110) ausgesandte elektromagnetische Strahlung zu erfassen;
eine Ermittlungseinrichtung (118), die zum Ermitteln der räumlichen Beziehung zwischen der ersten Komponente (102) und der zweiten Komponente (104) basierend auf der erfassten elektromagnetischen Strahlung und basierend auf vorbekannten geometrischen Daten betreffend die Markereinrichtung (112) ausgebildet ist.

2. Sensoranordnung (106, 108) gemäß Anspruch 1, aufweisend zumindest eines der folgenden Merkmale:
die Markereinrichtung (112) enthält eine Mehrzahl von Markerstrukturen, die an der ersten Komponente (102) angebracht und im dreidimensionalen Raum, insbesondere nichtplanar, angeordnet sind;
die Sensoranordnung (106, 108) weist eine elektromagnetische Strahlung nichtreflektierende Trägerstruktur (110) auf, insbesondere ausgebildet als genau eine Trägerplatte oder als mehrere miteinander verbundene und voneinander in Abstandsrichtung zwischen den Komponenten (102, 104) räumlich beabstandete Trägerplatten (110', 110"), wobei die Trägerstruktur (110) an der die Markereinrichtung (112) aus elektromagnetische Strahlung reflektierendem Material angeordnet ist, und die an der ersten Komponente (102) anbringbar ist;
die Ermittlungseinrichtung (118) ist zum Ermitteln der räumlichen Beziehung unter Verwendung der erfassten elektromagnetischen Strahlung von nur einer Teilmenge von Markerstrukturen der Markereinrichtung (112) und basierend auf vorbekannten geometrischen Daten betreffend nur die Teilmenge der Markerstrukturen der Markereinrichtung (112) ausgebildet;
die Markereinrichtung (112) ist retroreflektierend ausgebildet;
die Markereinrichtung (112) ist vollständig passiv ausgebildet; die Markereinrichtung (112) weist eine Mehrzahl von separaten Markerstrukturen auf, deren jeweilige Form, deren jeweilige Größe und deren Relativposition zueinander die vorbekannten geometrischen Daten bilden;
die Markereinrichtung (112) weist vier, insbesondere genau vier oder genau sieben, vorzugsweise kreisförmige Markerstrukturen auf, vorzugsweise an Ecken und/oder in einem Mittelpunkt eines gedachten Vielecks, weiter vorzugsweise an Ecken eines gedachten Quadrats, angeordnet;
die Strahlungserfasseinrichtung (114) weist eine Kamera auf, die zum Erfassen eines die Markereinrichtung (112) enthaltenden Bildes eingerichtet ist.

3. Sensoranordnung (106, 108) gemäß einem der Ansprüche 1 bis 2, aufweisend eine elektromagnetische Strahlungsquelle (116), die zum Erzeugen von elektromagnetischer Strahlung zum Beleuchten der Markereinrichtung (112) und/oder von deren unmittelbarer Umgebung (110) ausgebildet und angeordnet ist.

4. Sensoranordnung (106, 108) gemäß Anspruch 3, wobei die elektromagnetische Strahlungsquelle (116) angrenzend an die Strahlungserfasseinrichtung (114), insbesondere in einer festen räumlichen Beziehung zu der Strahlungserfasseinrichtung (114) stehend, an der zweiten Komponente (104) anbringbar ist.

5. Sensoranordnung (106, 108) gemäß Anspruch 3 oder 4, wobei die elektromagnetische Strahlungsquelle (116) eine Mehrzahl, insbesondere sechs, von separaten Lichtquellen, insbesondere Leuchtdioden oder Leuchtdiodenarrays aufweist, die auf die Markereinrichtung (112) und/oder auf deren unmittelbare Umgebung (110) richtbar oder gerichtet sind.

6. Sensoranordnung (106, 108) gemäß Anspruch 5, wobei die Lichtquellen (116) die Strahlungserfasseinrichtung (114) ringförmig umgeben, insbesondere konzentrisch um die Strahlungserfasseinrichtung (114) herum angeordnet sind.

7. Sensoranordnung (106, 108) gemäß Anspruch 5 oder 6, wobei die Lichtquellen (116) in einer Ebene senkrecht zu einer Strahlungserfassrichtung der Strahlungserfasseinrichtung (114) angeordnet sind.

8. Sensoranordnung (106, 108) gemäß einem der Ansprüche 3 bis 7, wobei die elektromagnetische Strahlungsquelle (116) und die Strahlungserfasseinrichtung (114) derart angeordnet sind, dass eine Abstrahlrichtung der elektromagnetischen Strahlungsquelle (116) und eine Erfassrichtung der Strahlungserfasseinrichtung (114) zueinander antiparallel sind.

9. Sensoranordnung (106, 108) gemäß einem der Ansprüche 1 bis 8, aufweisend zumindest eines der folgenden Merkmale:
die Ermittlungseinrichtung (118) ist eingerichtet, mittels Bildverarbeitung von Erfassdaten der Strahlungserfasseinrichtung (114) und basierend auf den vorbekannten geometrischen Daten ein Abbild der Markereinrichtung (112) auf den Erfassdaten zu identifizieren und basierend darauf eine für die räumliche Beziehung indikative Information zu ermitteln;
die Ermittlungseinrichtung (118) ist eingerichtet, mittels Bildverarbeitung von Erfassdaten der Strahlungserfasseinrichtung (114) und basierend auf den vorbekannten geometrischen Daten ein Abbild der Markereinrichtung (112) auf den Erfassdaten zu identifizieren und basierend darauf eine für die räumliche Beziehung indikative Information zu ermitteln, wobei die Ermittlungseinrichtung (118) eingerichtet ist, die Bildverarbeitung basierend auf einer Parameteranpassung, insbesondere einer Parameteranpassung zur Minimierung der Summe der kleinsten quadratischen Abstände, zwischen den Erfassdaten und den parametrisierten vorbekannten geometrischen Daten durchzuführen;
die Ermittlungseinrichtung (118) ist eingerichtet, als räumliche Beziehung zumindest eine Information aus der Gruppe zu ermitteln, die besteht aus einem Abstand zwischen der ersten Komponente (102) und der zweiten Komponente (104), einer translatorischen Verschiebung zwischen der ersten Komponente (102) und der zweiten Komponente (104) entlang einer oder zweier Achsen senkrecht zu einem Abstandsvektor zwischen der ersten Komponente (102) und der zweiten Komponente (104), und einem Drehwinkel zwischen der ersten Komponente (102) und der zweiten Komponente (104);
die Ermittlungseinrichtung (118) ist eingerichtet, bei teilweiser Verdeckung der Markereinrichtung (112) mittels Bildverarbeitung von Erfassdaten der Strahlungserfasseinrichtung (114) basierend auf den vorbekannten geometrischen Daten und unter Modellierung einer teilweisen Verdeckung ein Abbild eines unverdeckten Teils der Markereinrichtung (112) auf den Erfassdaten zu erkennen;
die Ermittlungseinrichtung (118) ist eingerichtet, bei teilweiser Verdeckung der Markereinrichtung (112) mittels Bildverarbeitung von Erfassdaten der Strahlungserfasseinrichtung (114) basierend auf den vorbekannten geometrischen Daten und unter Modellierung einer teilweisen Verdeckung ein Abbild eines unverdeckten Teils der Markereinrichtung (112) auf den Erfassdaten zu erkennen, wobei die Modellierung einer teilweisen Verdeckung durch Anpassung der Erfassdaten auf der Basis von Kurventeilsegmenten einer vorbekannten geometrischen Form der Markereinrichtung (112) erfolgt;
die Sensoranordnung (106, 108) weist ferner ein Filter (152) auf, insbesondere ein Tiefpassfilter oder ein Bandpassfilter, das zwischen der Strahlungserfasseinrichtung (114) und der Ermittlungseinrichtung (118) zwischengeschaltet ist und eingerichtet ist, ein von der Strahlungserfasseinrichtung (114) bereitgestelltes Signal vor Weiterleitung an die Ermittlungseinrichtung (118) zu filtern, um Einflüsse von insbesondere hochfrequenten Vibrationen der ersten Komponente (102) zu unterdrücken;
die Sensoranordnung (106, 108) ist ferner eingerichtet zum Ermitteln einer räumlichen Beziehung zwischen der ersten Komponente (102) und einer dritten Komponente (170) der Anlage (100), wobei die Sensoranordnung (106, 108) ferner aufweist:
eine Messeinrichtung (172), insbesondere einen Theodolithen, die zum Ermitteln einer räumlichen Beziehung zwischen der zweiten Komponente (104) und der dritten Komponente (170) eingerichtet ist;
wobei die Ermittlungseinrichtung (118) eingerichtet ist, die räumliche Beziehung zwischen der ersten Komponente (102) und der dritten Komponente (170) basierend auf der ermittelten räumlichen Beziehung zwischen der ersten Komponente (102) und der zweiten Komponente (104) und basierend auf der ermittelten räumlichen Beziehung zwischen der zweiten Komponente (104) und der dritten Komponente (170) zu ermitteln.

10. Anlage (100), aufweisend:
eine erste Komponente (102);
eine zweite Komponente (104);
wobei die Komponenten (102, 104) relativ zueinander beweglich sind;
eine Sensoranordnung (106, 108) gemäß einem der Ansprüche 1 bis 9 zum Ermitteln einer räumlichen Beziehung zwischen der ersten Komponente (102) und der zweiten Komponente (104).

11. Anlage gemäß Anspruch 10, wobei die Anlage als Tunnelbohrmaschine (1900) ausgebildet ist, insbesondere derart, dass die erste Komponente ein Bohrkopf (1920) oder ein Frontschild (1925) und die zweite Komponente ein Gripper-Schild (1930) für eine Tunnelbohrmaschine (1900) ist.

12. Anlage gemäß Anspruch 10, wobei die Anlage als Fossilbrennstoffförderanlage (2200), insbesondere als Erdgasförderanlage oder als Erdölförderanlage, ausgebildet ist.

13. Anlage gemäß Anspruch 10 oder 12, wobei die erste Komponente eine insbesondere schwimmfähige Plattform (2220) und die zweite Komponente ein Steigrohr (2210) oder ein Eruptionskreuz (2250) für eine insbesondere Offshore betriebene Fossilbrennstoffförderanlage (2200) ist.

14. Anlage (100) gemäß einem der Ansprüche 10 bis 13, aufweisend zumindest eines der folgenden Merkmale:
die erste Komponente (102) und die zweite Komponente (104) sind kontaktfrei und verbindungsmittelfrei und sind zum Ermitteln der räumlichen Beziehung mittels der elektromagnetischen Strahlung kommunizierfähig gekoppelt;
die erste Komponente (102) und die zweite Komponente (104) sind relativ zueinander translatorisch verschiebbar und/oder rotatorisch bewegbar gelagert;
die Anlage (100) weist eine Steuereinheit (118) auf, die eingerichtet ist, die erste Komponente (102) und/oder die zweite Komponente (104) basierend auf der ermittelten räumlichen Beziehung zu steuern.

15. Verfahren zum Ermitteln einer räumlichen Beziehung zwischen einer ersten Komponente (102) und einer zweiten Komponente (104) einer Anlage (100), wobei die Komponenten (102, 104) relativ zueinander beweglich sind oder bewegt werden, wobei eine Markereinrichtung (112) an der ersten Komponente (102) angebracht ist und eine Strahlungserfasseinrichtung (114) an der zweiten Komponente (104) angebracht ist, wobei das Verfahren aufweist:
Erfassen von von der Markereinrichtung (112) und/oder von deren unmittelbarer Umgebung ausgesandter elektromagnetischer Strahlung mittels der Strahlungserfasseinrichtung (114);
Ermitteln der räumlichen Beziehung zwischen der ersten Komponente (102) und der zweiten Komponente (104) basierend auf der erfassten elektromagnetischen Strahlung und basierend auf vorbekannten geometrischen Daten betreffend die Markereinrichtung (112).
